# EUROPEAN PATENT APPLICATION

(11) **EP 1 605 359 A1**
(43) Date of publication of application: **14.12.2005**
(21) Application number: 04291482.0
(22) Date of filing: 11.06.2004
(51) Int. Cl.: G06F 12/00, G06F 12/14, G06F 7/10

(54) **Hiding information transmitted on a data bus**

(71) Applicant: Axalto SA, 92120 Montrouge (FR)
(72) Inventor: Joffray, Olivier c/o Axalto SA, IP Department, 92120 Montrogue (FR); Goubin, Louis c/o Axalto SA, IP Department, 92120 Montrogue (FR)

(57) **Abstract**

A smart card is provided in which non-encrypted data on the data bus, in particular address data, is hidden. The smart card comprises a microcontroller (10), a memory (12) and a data bus (14) for the transmission of data therebetween. Memory address data is hidden by use of a data bus interface (18) provided at each of the microcontroller (10) and the memory (12) which performs a scrambling/unscrambling function on the non-encrypted data.

## Description

### Field of the invention

The present invention relates to hiding information transmitted on a data bus, and in particular to any smart card, or security chip, comprising a microcontroller and an additional memory component, such as a flash memory, that communicate through a data bus, such as a SPI bus.

### Background of the invention

Most current smart-cards function by means of a single electronic chip in which many security features are embedded. However, the static memory capacity of such cards is limited. Most recent smart cards provide only 128 Kbytes of static memory such as EEPROM.

Multimedia Memory Cards (MMC) are known in which large amounts of flash memory are embedded. MMC's having 64Mbytes of memory are very common, and not very expensive. Other technologies have also been proposed that offer an equivalent amount of memory for a comparable price.

There is a lot of interest in combining the security of a smart card with the memory capacity of an MMC. Such a smart card could be of interest for a wide range of applications, such as very large SIM cards.

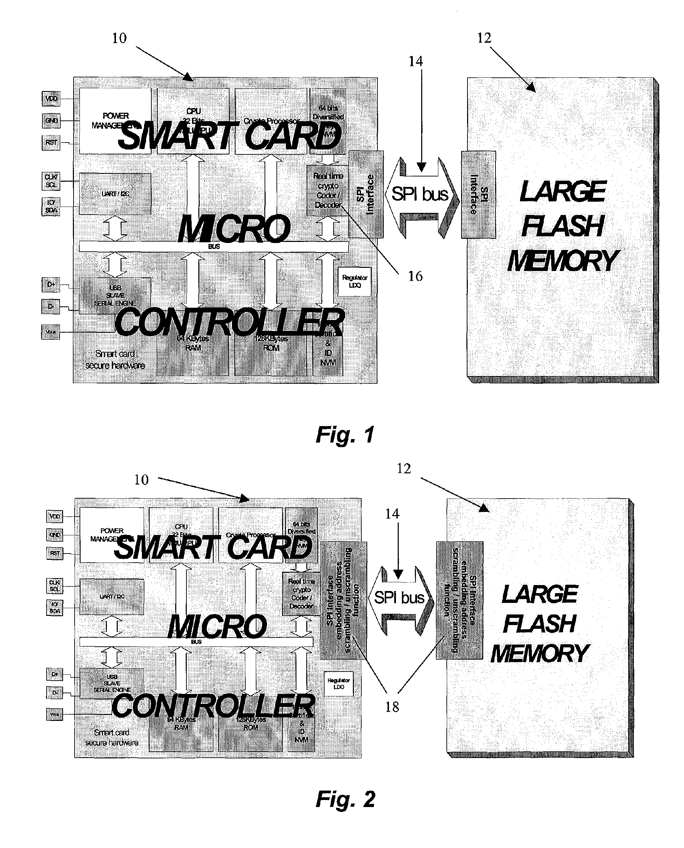

Fig. 1 illustrates a smart card architecture in which a microcontroller 10 and a flash memory 12 communicate via a serial peripheral interface (SPI) bus 14.

In order to protect the data to be to read from or written in the memory 12, a real time cryptographic encoder/decoder 16 is implemented in the microcontroller 10. The cryptographic keys are managed and saved in the microcontroller 10 itself and so, if the SPI bus is accessed by a hacker, the data exchanged between the microcontroller 10 and the flash memory 12 is itself not discovered. However, accessing the SPI bus 14 does allow other non-encrypted information, such as the addresses in the memory 12 where the relevant data is read or written, to be determined. While this does not amount to knowing the data itself, the knowledge of the addresses is still a security issue.

According to a first aspect of the present invention, there is provided a smart card as set out in the attached claim 1.

According to a second aspect of the present invention, there is provided a method of operating a smart card as set out in the attached claim 6.

### Brief description of the drawings

The present invention will be described hereinafter, by way of example only, with reference to the accompanying drawings, in which:
Fig. 1 illustrates components of a prior art smart card; and
Fig. 2 illustrates components of a smart card according to an embodiment of the present invention.

### Detailed description of preferred embodiments

The security of an existing data bus can be improved by adding an electronic device to the SPI interface 18 (see Fig. 2). The main function of the device is to scramble/unscramble the non-encrypted data carried on the data bus 14.

This non-encrypted data is protected by the scrambling so that the non-variable values transmitted on the bus are changed each time they are transmitted.

The data read or written does not need to be part of the scrambling as it is already encrypted/decrypted by the smart card microcontroller 10.

Fig. 2 shows a preferred embodiment of the invention, where the the non-encrypted data carried on the data bus 14 comprises memory addresses. However, it will be appreciated that the invention is suitable for any type of non-encrypted data.

As seen in Fig. 2, the SPI interface 18 of both the smart card microcontroller 10 and the large flash memory 12 are upgraded over and above the interfaces shown in Fig. 1 to include a function that scrambles or unscrambles the addresses of the read and written data in the flash memory 12.

In one implementation, a symmetric scrambling and/or cryptographic algorithm is implemented in the SPI interface 18. Thus, both the microcontroller 10 and the large flash memory 12 must share a key.

It will be appreciated that a wide range of scrambling and/or cryptographic algorithms can be used, and also that the key value can be freely chosen, as long as it is not known outside the smart card.

### Industrial applicability

An initialisation and use process can take place as follows:
- The first time the smart card starts, the microcontroller checks for the presence of the flash memory by polling the SPI bus.
- If the presence of the flash memory is confirmed, the microcontroller randomises a secret key value that it sends to the flash memory through a dedicated API.
- The microcontroller then checks that the secret key storage was well performed by writing and reading a few bytes in the flash memory.
- If the test was successful, the microcontroller locks the key storage function. Upon receiving this command, the flash memory resets a session key generation counter that is renewed at each memory access. The microcontroller also performs this step.
- Each time an access to the flash memory is engaged, the microcontroller generates a session key from both the secret key and the counter. Then, the counter is incremented by one.
- Upon receiving a command to access its data, the flash memory calculates the session key using same method as the microcontroller. It is consequently able to unscramble the address access sent by the microcontroller.

Improvements and modifications can be made to the above without departing from the scope of the present invention.

## Claims

1. A smart card comprising a microcontroller (10), a memory (12), and a data bus (14) for transmitting data therebetween, **characterised in that** each of the microcontroller (10) and the memory (12) is provided with a data bus interface (18) arranged to scramble and/or unscramble non-encrypted data on the data bus.

2. The smart card of claim 1, wherein the memory (12) comprises one selected from the group comprising; a flash memory, an EPROM memory and an EEPROM memory.

3. The smart card of claim 1 or claim 2, wherein the data bus (14) comprises an SPI bus.

4. The smart card of any preceding claim, wherein each data bus interface (18) comprises a symmetric scrambling or cryptographic algorithm.

5. The smart card of any preceding claim, wherein the non-encrypted data comprises memory address data.

6. A method of operating a smart card which comprises a microcontroller (10), a memory (12), and a data bus (14) for transmitting data therebetween; the method comprising the steps of providing a data bus interface (18) at each of the microcontroller (10) and the memory (12), and using the data bus interface (18) to scramble and/or unscramble non-encrypted data on the data bus.

7. The method of claim 6, wherein the step of scrambling and/or unscrambling the non-encrypted data comprises the use of a symmetric scrambling or cryptographic algorithm.

8. The method of claim 6 or claim 7, wherein the non-encrypted data comprises memory address data.

9. The method of any of claims 6 to 8, wherein the microcontroller (10) and the memory (12) share a key.

10. The method of claim 9, wherein the key is generated by the microcontroller (10) and sent to the memory (12) via a dedicated API.
